# EUROPEAN PATENT APPLICATION

(11) **EP 4 636 867 A2**
(43) Date of publication of application: **22.10.2025**
(21) Application number: 25170759.2
(22) Date of filing: 15.04.2025
(51) Int. Cl.: H01M 4/525, H01M 4/131, H01M 4/1391, H01M 4/62

(54) **CATHODE FOR LITHIUM SECONDARY BATTERY AND LITHIUM SECONDARY BATTERY INCLUDING THE SAME**

(30) Priority: 15.04.2024 KR 20240050153
(71) Applicant: SK On Co., Ltd., Seoul 03161 (KR)
(72) Inventor: HWANG, Duck Chul, 34124 Daejeon (KR); KIM, Jong Hwa, 34124 Daejeon (KR); LEE, Joon Yeob, 34124 Daejeon (KR)
(74) Representative: Stolmár & Partner Patentanwälte PartG mbB

(57) **Abstract**

A cathode for a lithium secondary battery according to embodiments of the present disclosure may include a current collector, and a cathode active material layer which is disposed on at least one surface of the current collector, and includes a cathode active material including a lithium metal oxide having a secondary particle form in which a plurality of primary particles are aggregated, and doped with at least one dopant element, a conductive material comprising carbon nanotubes, and a binder. An aspect ratio of the primary particles may be 1.4 to 7.0, and the ratio of the weight of the conductive material to the weight of the binder may be 0.35 to 1.45.

## Description

### [BACKGROUND OF THE INVENTION]

### 1. Field of the Invention

The present disclosure relates to a cathode for a lithium secondary battery and a lithium secondary battery, and more specifically, to a cathode for a lithium secondary battery, which includes a current collector and a cathode active material layer, and a lithium secondary battery.

### 2. Description of the Related Art

A secondary battery is a battery that can be repeatedly charged and discharged. With rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

For example, the lithium secondary battery may include: an electrode assembly including a cathode, an anode, and a separation membrane (separator); and an electrolyte solution in which the electrode assembly is impregnated. The lithium secondary battery may further include, for example, a pouch-type outer case in which the electrode assembly and the electrolyte solution are housed.

For example, the cathode may use a lithium metal oxide as a cathode active material. When charge and discharge cycles are repeated, the surface of the cathode active material may be damaged, and side reactions with the electrolyte solution may occur.

### [SUMMARY OF THE INVENTION]

An object of the present disclosure is to provide a cathode for a lithium secondary battery with improved cycle life characteristics and output characteristics.

Another object of the present disclosure is to provide a lithium secondary battery including the cathode for a lithium secondary battery with improved cycle life characteristics and output characteristics.

A cathode for a lithium secondary battery according to exemplary embodiments may include: a cathode current collector; and a cathode active material layer which is disposed on at least one surface of the cathode current collector, and includes a cathode active material including a lithium metal oxide having a secondary particle form in which a plurality of primary particles are aggregated, and doped with at least one dopant element, a conductive material including carbon nanotubes, and a binder. The primary particles may have an aspect ratio of 1.4 to 7.0, and a ratio of a weight of the conductive material to a weight of the binder may be 0.35 to 1.45.

In some embodiments, the primary particles may have an aspect ratio of 2.5 to 5.5.

In some embodiments, the lithium metal oxide may include nickel, wherein a molar fraction of nickel relative to the total number of moles of all elements excluding lithium and oxygen in the lithium metal oxide may be 0.5 to 1.

In some embodiments, the molar fraction of nickel relative to the total number of moles of all elements excluding lithium and oxygen in the lithium metal oxide may be 0.6 to 0.94.

In some embodiments, the dopant element may include at least one of Al, Ti, Zr, Ba, Sr, W, Nb, Y, Mg, V, Ta, Mo, La and B.

In some embodiments, the dopant element may include at least one of Al, Ti, Zr and W.

In some embodiments, the dopant element may include two or more different dopant elements.

In some embodiments, a content by weight of the dopant element may be 100 ppm to 15,000 ppm based on a total weight of the lithium metal oxide.

In some embodiments, the content by weight of the dopant element may be 2,000 ppm to 12,000 ppm based on the total weight of the lithium metal oxide.

In some embodiments, the carbon nanotube may include multi-walled carbon nanotubes (MWCNTs).

In some embodiments, the carbon nanotubes may have a BET specific surface area of 100 m²/g to 450 m²/g.

In some embodiments, the carbon nanotubes may have a BET specific surface area of 200 m²/g to 400 m²/g.

In some embodiments, the binder may include a fluorinated binder.

In some embodiments, a weight ratio of the conductive material to the binder may be 0.5 to 1.0 based on the total weight of the cathode active material layer.

In some embodiments, the weight ratio of the binder to the conductive material may be 0.7 to 1.0 based on the total weight of the cathode active material layer.

A lithium secondary battery according to exemplary embodiments may include: the above-described cathode; and an anode disposed to face the cathode.

The lithium secondary battery according to exemplary embodiments of the present disclosure may exhibit improved cycle life characteristics and capacity characteristics.

The lithium secondary battery according to exemplary embodiments may use a lithium metal oxide doped with a dopant element as a cathode active material. The dopant element may suppress structural deterioration of the cathode active material during charge and discharge cycles. Accordingly, the deterioration in cycle life characteristics and capacity characteristics caused by damage to the cathode active material may be suppressed.

The lithium secondary battery according to exemplary embodiments may include carbon nanotubes as the cathode conductive material. Accordingly, the output characteristics and cycle life characteristics of the secondary battery may be improved.

In addition, the cathode conductive material may be added in a predetermined ratio with the cathode binder. Accordingly, the deterioration in the output characteristics and cycle life characteristics of the secondary battery may be suppressed, while storage performance may also be improved.

The cathode for a lithium secondary battery and the lithium secondary battery of the present disclosure may be widely applied in green technology fields, such as electric vehicles, battery charging stations, as well as solar power generation, wind power generation, and the like, which use the batteries. The cathode for a lithium secondary battery and the lithium secondary battery of the present disclosure may be used in eco-friendly electric vehicles, hybrid vehicles, and the like, which are aimed at mitigating climate change by reducing air pollution and greenhouse gas emission.

### [BRIEF DESCRIPTION OF THE DRAWINGS]

The above and other objects, features and other advantages of the present disclosure will be more clearly understood from the following detailed description taken in conjunction with the accompanying drawings, in which:
FIGS. 1 and 2 are a schematic plan view and a cross-sectional view of a lithium secondary battery according to exemplary embodiments, respectively;
FIGS. 3A to 5A, and FIGS. 3B to 5B are images illustrating cross-sections of cathode active material particles according to exemplary embodiments, respectively, observed using a scanning electron microscope (SEM) for measurement; and
FIG. 6 is an image illustrating a carbon nanotube conductive material included in a cathode according to exemplary embodiments, observed using the scanning electron microscope for measurement.

### [DETAILED DESCRIPTION OF THE INVENTION]

According to exemplary embodiments of the present disclosure, there is provided a lithium secondary battery which includes: a cathode including a lithium metal oxide having a secondary particle form in which a plurality of primary particles are aggregated, a conductive material, and a binder; and an anode disposed to face the cathode.

Hereinafter, embodiments of the present disclosure will be described in detail. However, these are merely illustrative and the present disclosure is not limited to the specific embodiments described by way of example.

Unless otherwise defined herein, when a portion such as a layer, film, thin-film, region, or plate, etc. is present "on" or "above" another portion, it may include not only the case where the portion is present "directly on" the other portion, but also the case where a further another portion is present in the middle therebetween.

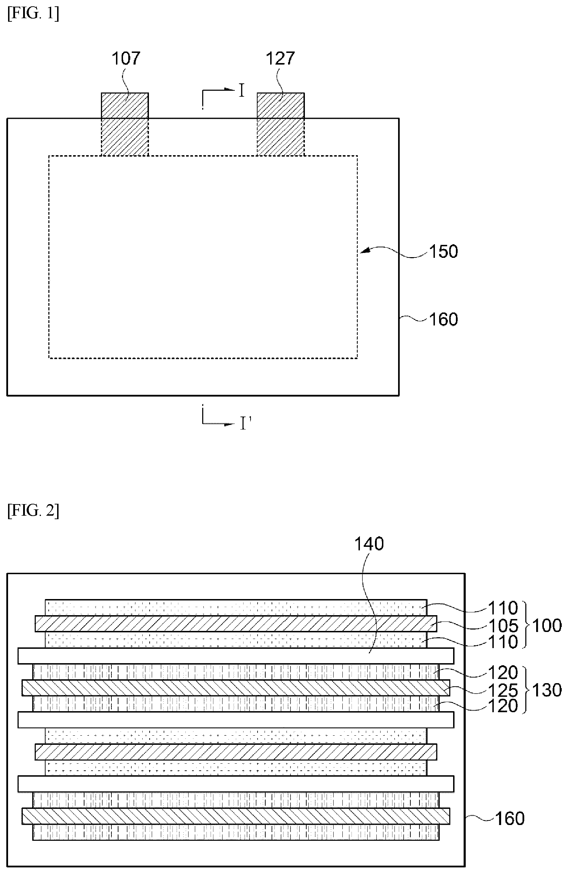

FIGS. 1 and 2 are a schematic plan view and a cross-sectional view illustrating a rechargeable lithium battery according to exemplary embodiments, respectively. For example, FIG. 2 is a cross-sectional view taken on line I-I' in FIG. 1.

Referring to FIGS. 1 and 2, the lithium secondary battery may include a cathode 100, an anode 130 disposed to face the cathode 100, and a separation membrane 140 interposed between the cathode 100 and the anode 130. For example, the lithium secondary battery may include the cathode 100 and the anode 130 disposed to face the cathode 100, which will be described below.

According to exemplary embodiments, the cathode 100 may include a cathode current collector 105 and a cathode active material layer 110 disposed on at least one surface of the cathode current collector 105.

The cathode current collector 105 may include stainless steel, nickel, aluminum, titanium or an alloy thereof. The cathode current collector 105 may also include aluminum or stainless steel subjected to surface treatment with carbon, nickel, titanium or silver. For example, the cathode current collector 105 may have a thickness of 10 µm to 50 µm.

According to exemplary embodiments, the cathode active material layer 110 may include a cathode active material. The cathode active material may include a compound capable of reversibly intercalating and deintercalating lithium ions.

According to exemplary embodiments, the cathode active material may include a lithium metal oxide having a secondary particle form in which a plurality of primary particles are aggregated.

According to exemplary embodiments, the primary particles may have an aspect ratio of 1.4 to 7.0.

If the aspect ratio of the primary particles is less than 1.4, the primary particles may not be stably aggregated. For example, cracks may occur in the secondary particle during repeated charge and discharge cycles, and the occurrence of gaps or pores inside the secondary particle, in which the primary particles are aggregated, may increase, thereby degrading the structural stability. Accordingly, the cycle life characteristics of the cathode active material may be reduced.

The primary particle may be morphologically distinguished from the secondary particle. For example, the secondary particle may mean a particle in which a plurality of primary particles are aggregated and are substantially regarded or observed as a single particle. For example, in the case of the secondary particles, the boundaries of the primary particles may be observed in a cross-sectional image of the particle obtained using a scanning electron microscope (SEM).

If the aspect ratio of the primary particle exceeds 7.0, the length of a major axis, which serves as the migration pathway of lithium ions, may become excessively long, thereby degrading the output characteristics.

The term "aspect ratio" as used herein refers to a ratio of the length of the major axis to the length of a minor axis of the primary particle. For example, the aspect ratio is defined as the ratio of the length of the longest straight line to the length of the shortest straight line among the straight lines that intersect the cross-section of the primary particle while passing through the center of the cross-section of the primary particle. For example, the closer the aspect ratio is to 1, the more spherical the particle appears, and the larger the aspect ratio is, the more rod-type the particle appears.

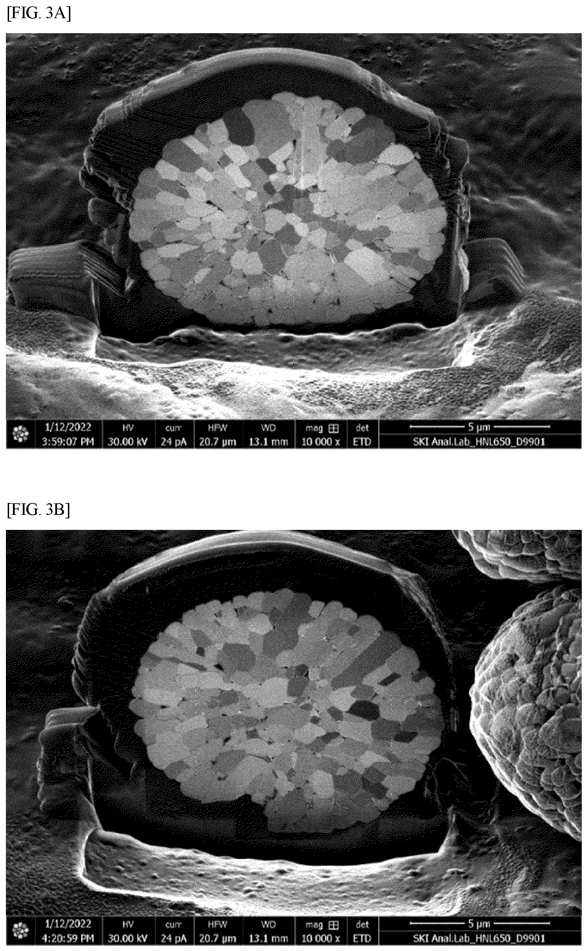

FIGS. 3A to 5A, and FIG. 3B to 5B are images illustrating cross-sections of cathode active material particles according to exemplary embodiments, respectively, observed using a scanning electron microscope (SEM) for measurement.

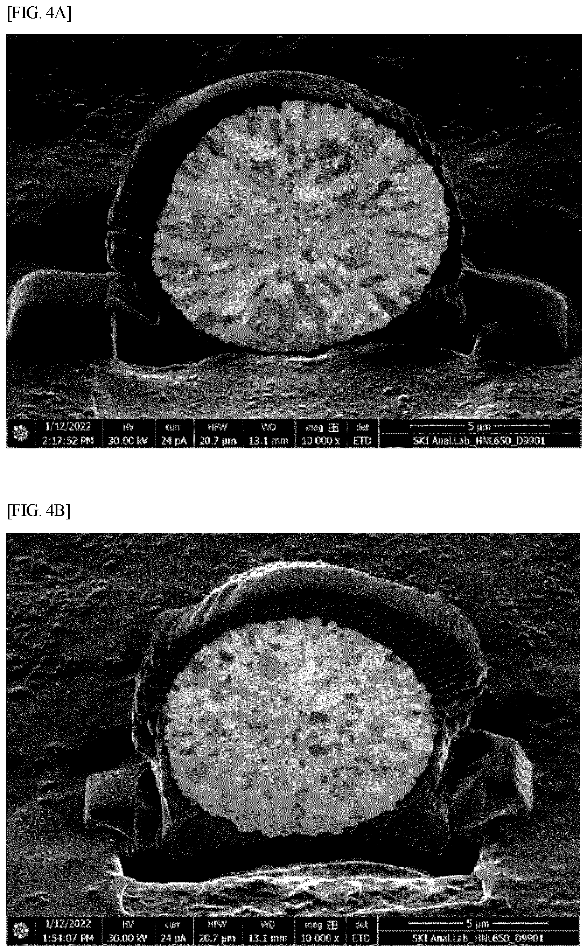

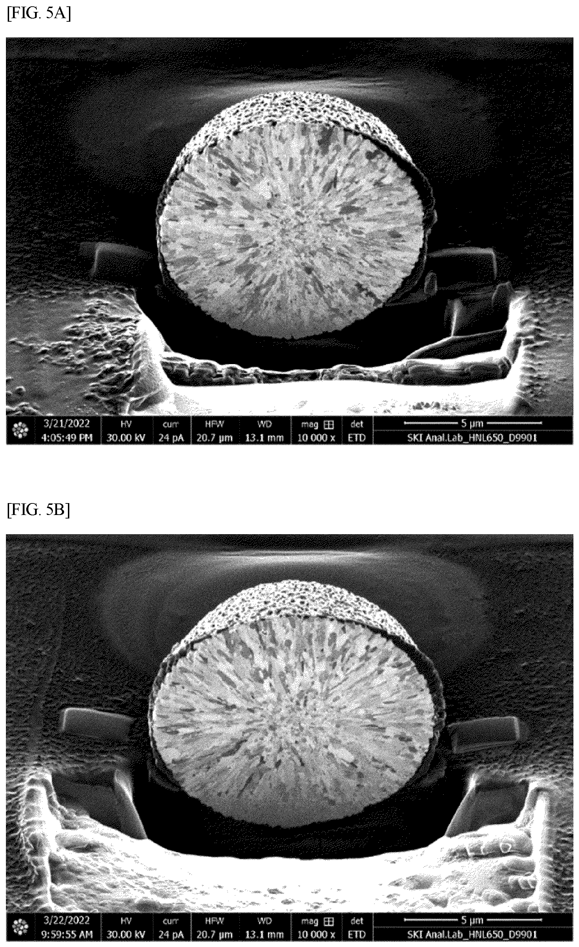

Specifically, FIGS. 3A and 3B are images illustrating cross-sections of arbitrary cathode active material particles among the cathode active material particles within the secondary particle structure, wherein primary particles having an aspect ratio of 1.42 are aggregated, respectively, observed using the SEM for measurement. FIGS. 4A and 4B are images illustrating cross-sections of arbitrary cathode active material particles among the cathode active material particles within the secondary particle structure, wherein primary particles having an aspect ratio of 2.58 are aggregated, respectively, observed using the SEM for measurement. FIGS. 5A and 5B are images illustrating arbitrary cathode active material particles among the cathode active material particles within the secondary particle structure, wherein primary particles having an aspect ratio of 6.51 are aggregated, respectively, observed using the SEM for measurement.

Referring to FIGS. 3A to 5A and FIG. 3B to 5B, it can be seen that when the primary particles have an aspect ratio of 1.42 to 6.51, the primary particles are stably aggregated, thereby forming secondary particles.

For example, the primary particles may have an aspect ratio of 1.42 to 7.0, or 1.5 to 7.0. Within the above range, the primary particles may be aggregated to stably form secondary particles. Accordingly, the collapse of the secondary particles form may be suppressed during repeated charging and discharging the secondary battery including the cathode active material, thereby improving the cycle life characteristics and output characteristics simultaneously.

In some embodiments, the primary particles may have an aspect ratio of 1.53 to 6.51, 2.0 to 6.51, 2.5 to 6.51, 2.5 to 6.0, 2.5 to 5.5, 2.58 to 5.5, or 2.58 to 5.02. Within the above range, the cycle life characteristics and output characteristics may be further improved.

In exemplary embodiments, the cathode active material may include a lithium metal oxide. For example, the primary particles may be composed entirely of lithium metal oxide, and the secondary particles formed by agglomeration of the primary particles may also be composed entirely of lithium metal oxide.

In some embodiments, the lithium metal oxide may have a median particle diameter (D₅₀) of 3 µm to 25 µm, 5 µm to 25 µm, or 5 µm to 20 µm. Within the above range, intercalation and deintercalation of lithium ions may be more efficiently facilitated.

The term "median particle diameter (D₅₀)" used in the present disclosure may refer to a particle diameter corresponding to a cumulative volume fraction of 50% in the volume-based particle size distribution of the lithium metal oxide.

In some embodiments, the cathode active material or the lithium metal oxide may include nickel. For example, the cathode active material or the lithium metal oxide may have a layered structure or a crystal structure represented by Formula 1 below.

[Formula 1] LiₓNiₐM_{b}O_{2+z}

In Formula 1, x, a, b and z may satisfy 0.8≤x≤1.2, 0.5≤a≤1, 0≤b≤0.5, -0.2≤z≤0.2, a+b=1. M may include Co, Mn and/or Al.

The chemical structure represented by Formula 1 indicates a bonding relationship between elements included in the layered structure or crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing introduction and substitution of the additional elements.

In one embodiment, the cathode active material may further include auxiliary elements which are added to the main active elements, thus to enhance chemical stability thereof or the layered structure/crystal structure. The auxiliary element may be incorporated into the layered structure/crystal structure together to form a bond, and it should be understood that this case is also included within the chemical structure range represented by Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may act as an auxiliary active element which contributes to the output activity of the cathode active material together with Co or Mn like Al.

For example, the cathode active material or the lithium metal oxide may include a layered structure or crystal structure represented by Formula 1-1 below.

[Formula 1-1] LiₓNiₐM1_{b1}M2_{b2}O_{2+z}

In Formula 1-1, M1 may include Co, Mn and/or Al. M2 may include the auxiliary elements described above. In Formula 1-1, x, a, b1, b2 and z may satisfy 0.8≤x≤1.2, 0.5≤a≤1, 0≤b1+b2≤0.5, - 0.2≤z≤0.2, a+b1+b2=1.

The cathode active material may include a nickel-cobalt-manganese (NCM)-based lithium oxide. In this case, an NCM-based lithium oxide with an increased content of nickel may be used.

Nickel may be provided as a transition metal associated with the output and capacity of the lithium secondary battery. Therefore, as described above, by employing a high-content (High-Ni) composition in the cathode active material, a high-capacity cathode and a high-capacity lithium secondary battery may be provided.

In this regard, as the content of Ni increases, the long-term storage stability and cycle life stability of the cathode or the secondary battery may be relatively reduced, and side reactions with the electrolyte may also increase. However, according to exemplary embodiments, by including Co, the cycle life stability and capacity retention characteristics may be improved through Mn while maintaining electrical conductivity.

In some embodiments, a molar fraction of nickel relative to the total number of moles of all elements excluding lithium and oxygen in the lithium metal oxide (for example, the molar fraction of nickel relative to the total number of moles of nickel, cobalt and manganese) may be 0.5 or more and less than 1, 0.5 to 0.99, 0.6 to 0.99, or 0.6 to 0.98. Within the above range, the output characteristics and the cycle life characteristics of the cathode active material may be simultaneously improved. For example, while the capacity characteristics are improved by the nickel element, the structural stability may be enhanced by the remaining elements excluding nickel. For example, an increase in the nickel content may enhance the capacity characteristics, thereby reducing the amount of lithium metal oxide used. Accordingly, the thickness of the electrode (for example, the cathode) may be reduced, leading to an improvement in the output characteristics.

In one embodiment, the molar fraction of nickel relative to the total number of moles of all elements excluding lithium and oxygen in the lithium metal oxide (for example, the molar fraction of nickel relative to the total number of moles of nickel, cobalt and manganese) may be 0.6 to 0.95, 0.6 to 0.94, 0.6 to 0.92, 0.7 to 0.92, 0.8 to 0.92, or 0.88 to 0.92. Within the above range, the output characteristics and cycle life characteristics of the cathode active material may be further improved.

In exemplary embodiments, the cathode active material (e.g., the lithium metal oxide) may further include a coating element or a dopant element. In one embodiment, the coating element or the dopant element may diffuse into the primary particles and be positioned inside the primary particles. In one embodiment, the coating element or the dopant element may be formed on the surface of the primary particles (e.g., between the primary particles). In one embodiment, the coating element or the dopant element may be positioned on the surface of the secondary particles in which the primary particles are aggregated.

In exemplary embodiments, the dopant element may include a metal element and/or a metalloid element. For example, the metal element may include Al, Ti, Zr, Ba, Sr, W, Nb, Y, Mg, V, Ta, Mo, La and the like. The metalloid element may include B.

In some embodiments, the dopant element or the coating element may include at least one selected from the group consisting of Al, Ti, Zr, Ba, Sr, W, Nb, Y, Mg, V, Ta, Mo, La and B. Accordingly, the structural stability of the primary particles or the secondary particles, in which the primary particles are aggregated, may be improved due to the dopant element, thereby enhancing the cycle life characteristics. In addition, the electrical conductivity of the cathode active material may be improved, thereby enhancing the output characteristics.

In one embodiment, the dopant element or the coating element may include at least one selected from the group consisting of Al, Ti, Zr and W. Accordingly, the cycle life characteristics and output characteristics of the cathode active material may be further improved.

In some embodiments, the dopant element or the coating element may be used in a combination of two or more dopant elements or coating elements. For example, a combination of Al and Y, Zr and Mo, Sr and W, Nb and Ti, Mg and B, Ta and Ba, or La and V may be used as the dopant element or coating element. Accordingly, the cycle life characteristics and output characteristics of the cathode active material may be further improved.

In one embodiment, the dopant element or the coating element may be used in a combination of three elements. For example, a combination of Ti, Sr and Y, or Al, Zr and W may be used. Accordingly, the cycle life characteristics and output characteristics of the cathode active material may be further improved.

In some embodiments, a content by weight of the dopant element or the coating element may be 100 ppm to 15,000 ppm, 300 ppm to 15,000 ppm, or 1,000 ppm to 14,000 ppm based on a total weight of the cathode active material (e.g., lithium metal oxide). Within the content range, the dopant elements or the coating elements may be positioned while maintaining an appropriate interval therebetween. Accordingly, the electrical conductivity of the cathode active material may be improved while suppressing side reactions by the dopant element or the coating element. As a result, the cycle life characteristics and the output characteristics may be improved.

In one embodiment, the content by weight of the dopant element or the coating element may be 2,000 ppm to 12,000 ppm, 2,000 ppm to 10,000 ppm, 2,000 ppm to 8,000 ppm, 2,000 ppm to 6,000 ppm, 2,000 ppm to 4,000 ppm, 2,500 ppm to 4,000 ppm, or 3,000 ppm to 4,000 ppm based on the total weight of the cathode active material (e.g., lithium metal oxide). Within the content range, the output characteristics and cycle life characteristics of the cathode active material may be further improved.

In some embodiments, the cathode active material may further include a lithium cobalt oxide-based active material, a lithium manganese oxide-based active material, a lithium nickel oxide-based active material, or a lithium metal phosphate-based active material (e.g., LiFePO₄), in addition to the lithium metal oxide.

In some embodiments, the cathode active material may further include a manganese (Mn)-rich active material, a lithium (Li) rich layered oxide (LLO)/over lithiated oxide (OLO)-based active material, or a cobalt (Co)-less active material, having a chemical structure or crystal structure represented by Formula 2 below, in addition to the lithium metal oxide.

[Formula 2] p[Li₂MnO₃]·(1-p)[Li_{q}JO₂]

In Formula 2, p and q may satisfy 0<p<1, 0.9≤q≤1.2, and J may include at least one element among Mn, Ni, Co, Fe, Cr, V, Cu, Zn Ti, Al, Mg and B.

According to exemplary embodiments, the cathode may include a conductive material. The conductive material may be added to the cathode active material layer 110 in order to enhance the conductivity thereof and/or the mobility of lithium ions or electrons.

According to exemplary embodiments, the conductive material may include carbon nanotubes. The carbon nanotubes may have a large specific surface area and high tensile strength. In addition, the carbon nanotubes may have high electrical conductivity. Accordingly, the cycle life characteristics and output characteristics of the cathode 100 may be improved by including the carbon nanotubes in the conductive material.

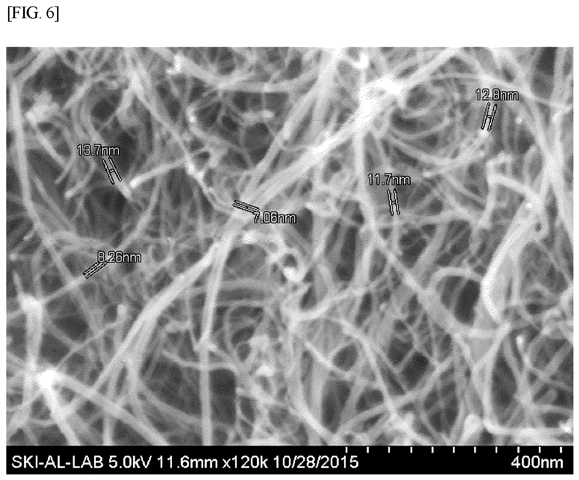

FIG. 6 is an image illustrating a carbon nanotube conductive material included in a cathode 100 according to exemplary embodiments, observed using the scanning electron microscope for measurement.

Referring to FIG. 6, it can be observed that the carbon nanotube conductive material can be formed in a network shape to have a high specific surface area.

For example, the carbon nanotube may include single-walled carbon nanotubes (SWCNTs), thin-walled carbon nanotubes (TWCNTs), multi-walled carbon nanotubes (MWCNTs), etc. The single-walled carbon nanotube may refer to a carbon nanotube having 1 to 2 walls. The thin-walled carbon nanotube may refer to a carbon nanotube having 3 to 7 walls. The multi-walled carbon nanotube may refer to a carbon nanotube having 8 or more walls.

In some embodiments, the carbon nanotubes may be the multi-walled carbon nanotubes. Accordingly, the cycle life characteristics and output characteristics of the cathode 100 may be further improved.

In some embodiments, the carbon nanotubes may have a BET specific surface area of 100 m²/g to 450 m²/g, or 200 m²/g to 450 m²/g. Within the above range, it is possible to prevent deterioration in cycle life characteristics due to an excessively increased BET specific surface area of the carbon nanotube, or deterioration in output characteristics due to an excessively decreased BET specific surface area. Within the above range, the output characteristics and cycle life characteristics of the cathode 100 may be simultaneously improved.

The term "BET surface area" used in the present disclosure may refer to a surface area measured by the Brunauer-Emmett-Teller (BET) method.

In one embodiment, the carbon nanotubes may have a BET specific surface area of 200 m²/g to 400 m²/g, 250 m²/g to 400 m²/g, 250 m²/g to 350 m²/g, or 250 m²/g to 300 m²/g. Within the above range, the output characteristics and cycle life characteristics of the cathode 100 may be further improved.

For example, the conductive material may further include a carbon-based conductive material such as graphite, carbon black, acetylene black, Ketjen black, graphene, vapor-grown carbon fibers (VGCFs), carbon fibers and/or a metal-based conductive material including tin, tin oxide, titanium oxide, or a perovskite material such as LaSrCoO₃, and LaSrMnO₃, but it is not limited thereto.

In some embodiments, the binder may include a fluorinated binder. For example, the binder may include polyvinylidene fluoride (PVDF), poly(vinylidene fluoride-co-hexafluoropropylene, PVDF-HFP), etc. The fluorinated binder may have high physicochemical stability and electrochemical stability. Accordingly, the storage stability of the cathode 100 may be improved.

The binder may further include, for example, polyacrylonitrile, polymethylmethacrylate, acrylonitrile butadiene rubber (NBR), poly(butadiene) rubber (BR), styrene-butadiene rubber (SBR), etc. In one embodiment, a fluorinated binder may be used alone as the cathode binder.

According to exemplary embodiments, a ratio of the weight of the conductive material to the weight of the binder in the cathode active material layer 110 may be 0.35 to 1.45. For example, a ratio of the content of the conductive material in the total weight of the cathode active material layer 110 to the content of the binder in the total weight of the cathode active material layer 110 may fall within the above range.

If the weight ratio is less than 0.35, the conductive material is included in a relatively small amount. Therefore, the capacity retention rate and output characteristics due to the conductive material may be relatively degraded. If the weight ratio exceeds 1.45, the binder is included in a relatively small amount. Therefore, the capacity recovery rate due to the binder may be relatively degraded. Within the above weight ratio range, the capacity retention rate, output characteristics, and capacity recovery rate may be simultaneously improved.

In some embodiments, the ratio of the weight of the conductive material to the weight of the binder in the cathode active material layer 110 may be 0.4 to 1.4, 0.4 to 1.3, 0.4 to 1.2, or 0.4 to 1.1. For example, the ratio of the content of the conductive material in the total weight of the cathode active material layer 110 to the content of the binder in the total weight of the cathode active material layer 110 may fall within the above range. Within the above range, the capacity retention rate, the output characteristics and the capacity recovery rate may be simultaneously improved.

In one embodiment, the ratio of the weight of the conductive material to the weight of the binder in the cathode active material layer 110 may be 0.5 to 1.0, 0.6 to 1.0, or 0.7 to 1.0. For example, the ratio of the content of the conductive material in the total weight of the cathode active material layer 110 to the content of the binder in the total weight of the cathode active material layer 110 may fall within the above range. Within the above range, the capacity retention rate, the output characteristics and the capacity recovery rate may be further improved.

In some embodiments, the ratio of the weight of the conductive material to the weight of the binder in the cathode active material layer 110 may be 0.7 to 1.0, 0.8 to 1.0, or 0.9 to 1.0. For example, a ratio of the content of the conductive material in the total weight of the cathode active material layer 110 to the content of the binder in the total weight of the cathode active material layer 110 may fall within the above range. Within the above range, the capacity retention rate and output characteristics may be improved while preventing the capacity recovery rate from degrading.

In some embodiments, the content of the conductive material may be 0.4% by weight ("wt%") to 2.5 wt%, 0.7 wt% to 2.5 wt%, or 0.7 wt% to 2.1 wt% based on the total weight of the cathode active material layer 110. Within the above range, the cycle life maintenance rate and capacity characteristics of the cathode 100 may be improved.

In some embodiments, the content of the binder may be 0.5 wt % to 2.5 wt %, 1 wt % to 2.5 wt %, or 1 wt % to 2 wt % based on the total weight of the cathode active material layer 110. Within the above range, the capacity recovery rate of the cathode 100 may be improved.

For example, a cathode slurry may be prepared by mixing the above-described cathode active material in a solvent. The cathode slurry may be applied to the cathode current collector 105, followed by drying and pressing the same, to prepare the cathode active material layer 110. The coating process may be performed using a method such as gravure coating, slot die coating, simultaneous multilayer die coating, imprinting, doctor blade coating, dip coating, bar coating or casting, but it is not limited thereto. The cathode active material layer 110 may include a binder, and optionally may further include a conductive material, a thickener, etc.

The solvent used in the manufacture of the cathode active material layer 110 may include, for example, N-methyl-2-pyrrolidone (NMP), dimethylformamide, dimethylacetamide, N,N-dimethylaminopropylamine, ethylene oxide, tetrahydrofuran, etc.

The binder may use the above-described binders. For example, the binder may include a fluorinated binder.

The conductive material may use the above-described conductive materials. For example, the conductive material may include carbon nanotubes.

The cathode active material layer 110 may further include a thickener and/or a dispersant. For example, the cathode active material layer 110 may further include a thickener such as carboxy methyl cellulose (CMC).

The anode 130 may include an anode current collector 125 and an anode active material layer 120 disposed on at least one surface of the anode current collector 125.

Non-limiting examples of the anode current collector 125 may include a copper foil, a nickel foil, a stainless steel foil, a titanium foil, a nickel foam, a copper foam, a polymer substrate coated with conductive metal and the like. For example, the anode current collector 125 may have a thickness of 10 µm to 50 µm.

The anode active material layer 120 may include an anode active material. A material capable of intercalating and deintercalating lithium ions may be used as the anode active material. For example, the anode active material may include crystalline carbon-based materials such as crystalline carbon, amorphous carbon, a carbon composite, or carbon fibers, etc.; lithium metal; a lithium alloy; a silicon (Si)-containing material or a tin (Sn)-containing material, etc.

The amorphous carbon may include, for example, mesocarbon microbeads (MCMB), mesophase pitch-based carbon fibers (MPCF), etc.

Examples of the crystalline carbon may include graphite-based carbons such as natural graphite, artificial graphite, graphite cokes, graphite MCMB, and graphite MPCF, etc.

The lithium metal may include pure lithium metal or lithium metal having a protective layer formed thereon for suppressing dendrite growth, etc. In one embodiment, a lithium metal-containing layer deposited or coated on the anode current collector 125 may be used as the anode active material layer 120. In one embodiment, a lithium thin-film layer may be used as the anode active material layer 120.

Elements included in the lithium alloy may include aluminum, zinc, bismuth, cadmium, antimony, silicon, lead, tin, gallium, indium, etc.

The silicon-containing material may provide more enhanced capacity characteristics. The silicon-containing material may include Si, SiOₓ(0<x<2), metal-doped SiOₓ(0<x<2), a silicon-carbon composite, etc. The metal may include lithium and/or magnesium, and the metal-doped SiOₓ(0<x<2) may include a metal silicate.

For example, an anode slurry may be prepared by mixing the anode active material in a solvent. The anode slurry may be applied/deposited to the anode current collector 125, followed by drying and pressing the same, to prepare the anode active material layer 120. The coating process may be performed using a method such as gravure coating, slot die coating, simultaneous multilayer die coating, imprinting, doctor blade coating, dip coating, bar coating, casting, etc., but it is not limited thereto. The anode active material layer 120 may further include a binder, and optionally may further include a conductive material, a thickener, etc.

The solvent for the anode active material layer 120 may include, for example, water, pure water, deionized water, distilled water, ethanol, isopropanol, methanol, acetone, n-propanol, t-butanol, etc.

The above-described materials that can be used when preparing the cathode as the binder, conductive agent, and thickener may be used for the anode.

In some embodiments, a styrene-butadiene rubber (SBR)-based binder, carboxymethyl cellulose (CMC), polyacrylic acid-based binder, poly(3,4-ethylenedioxythiophene, PEDOT)-based binder, and the like may be used as an anode binder.

A separation membrane 140 may be interposed between the cathode 100 and the anode 130. The separation membrane 140 may be configured to prevent an electrical short-circuit between the cathode and the anode, and to allow a flow of ions to occur. For example, the separation membrane 140 may have a thickness of 10 µm to 20 µm.

For example, the separation membrane 140 may include a porous polymer film or a porous nonwoven fabric. The porous polymer film may include a polyolefin-based polymer such as an ethylene polymer, a propylene polymer, an ethylene/butene copolymer, an ethylene/hexene copolymer, and an ethylene/methacrylate copolymer, etc. The porous nonwoven fabric may include glass fibers having a high melting point, polyethylene terephthalate fibers, etc. The separation membrane 140 may also include a ceramic-based material. For example, inorganic particles may be applied to the polymer film or dispersed within the polymer film to improve heat resistance.

The separation membrane 140 may have a single-layer or multi-layer structure including the above-described polymer film and/or non-woven fabric.

According to exemplary embodiments, the cathode 100, the anode 130 and the separation membrane 140 may be repeatedly disposed to form an electrode assembly 150. In some embodiments, the electrode assembly 150 may be of a winding type, a stacking type, a z-folding type, or a stack-folding type electrode assembly.

The electrode assembly 150 may be housed in a case 160 together with an electrolyte solution to define a lithium secondary battery. According to exemplary embodiments, a non-aqueous electrolyte solution may be used as the electrolyte.

The non-aqueous electrolyte solution may include a lithium salt as the electrolyte and an organic solvent, wherein the lithium salt is represented by, for example, Li⁺X⁻, and examples of an anion (X⁻) of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, etc. These may be used alone or in combination of two or more thereof.

The organic solvent may include an organic compound which has sufficient solubility for the lithium salt and the additive, and is electrochemically stable without exhibiting reactivity in the secondary battery. For example, the organic solvent may include at least one of a carbonate solvent, an ester solvent, a ketone solvent, an alcohol solvent and an aprotic solvent.

The carbonate solvent may include, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, and vinylene carbonate, etc.

The ester solvent may include, for example, methyl acetate (MA), ethyl acetate (EA), n-propyl acetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), γ-butyrolactone (GBL), decanolide, valerolactone, mevalonolactone and caprolactone, etc.

The ether organic solvent may include, for example, dibutyl ether, tetraethylene glycol dimethyl ether (TEGDME), diethylene glycol dimethyl ether (DEGDME), dimethoxy ethane, diethoxy ethane, tetrahydrofuran (THF) and 2-methyltetrahydrofuran, etc.

The ketone solvent may include, for example, cyclohexanone.

The alcohol solvent may include, for example, ethyl alcohol, or isopropyl alcohol, etc.

The aprotic solvent may include, for example, dimethyl sulfoxide, acetonitrile, sulfolane and propylene sulfite, etc.

In some embodiments, the electrolyte solution may further include an additive. The additive may include, for example, a cyclic carbonate compound, a fluorine-substituted carbonate compound, a sultone compound, a cyclic sulfate compound, a cyclic sulfite compound, a phosphate compound and a borate compound. These may be used alone or in combination of two or more thereof.

The cyclic carbonate compound may include, for example, vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis-oxalato phosphate, lithium difluoro phosphate, etc.

The borate compound may include lithium bis(oxalate) borate, etc.

For example, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) extending or exposed to the outside of the case 160.

For example, a pouch-type case, a prismatic case, a cylindrical case, or a coin-type case, etc. may be used as the case 160.

Hereinafter, embodiments of the present disclosure will be further described with reference to specific experimental examples. However, the following examples and comparative examples included in the experimental examples are only given for illustrating the present disclosure and those skilled in the art will obviously understand that various alterations and modifications are possible within the scope and spirit of the present disclosure. Such alterations and modifications are duly included in the appended claims.

### Examples and Comparative Examples

### Comparative Example 1

### (1) Preparation of cathode

Secondary particles (hereinafter, CAM-1) were prepared, in which primary particles having an aspect ratio of 2.58, not doped with a dopant element, and a composition of LiNi_{0.5}Co_{0.2}Mn_{0.3}O₂ were aggregated.

The aspect ratio was calculated as a ratio of the longest diameter length to the shortest diameter length among the diameter lengths in the cross-section of the primary particle by observing the cross-section of the primary particle using a scanning electron microscope (SEM) for measurement.

The CAM-1 as an active material, carbon nanotubes having a BET surface area of 250 m²/g as a conductive material, and polyvinylidene fluoride (PVDF) as a binder were mixed in a weight ratio of 98.3:0.7:1 to prepare a slurry. The slurry was uniformly applied to an aluminum foil having a thickness of 15 µm, dried at 130 °C, and then pressed to prepare a cathode for a lithium secondary battery.

### (2) Preparation of anode

An anode slurry was prepared, including 90 wt% of artificial graphite as an anode active material, 4 wt% of KS6 as a flake-type conductive material as a conductive material, 3 wt% of styrene-butadiene rubber (SBR) as a binder, and 3 wt% of carboxymethyl cellulose (CMC) as a thickener. The anode slurry was uniformly applied to a copper foil having a thickness of 15 µm, dried, and then pressed to prepare an anode.

### (3) Manufacture of lithium secondary battery

The cathode and the anode prepared as described above were respectively cut into a predetermined size and stacked, then an electrode cell was prepared by interposing a separator (ceramic layer/polyethylene/ceramic layer; 1.5 µm/9 µm/1.5 µm) each having a ceramic layer containing boehmite and an acrylate binder coated in a thickness of 1.5 µm on both surfaces of a polyethylene foil with a thickness of 9 µm between the cathode and the anode. Thereafter, tap parts of the cathode and the anode were welded, respectively. The assembly of the welded cathode/separator/anode was placed into a pouch, and three sides of the pouch were sealed, leaving one side open for electrolyte solution injection. At this time, a portion having the electrode tabs was included in the sealing part. After injecting the electrolyte solution through the remaining side except for the sealing part, and the remaining side was also sealed, followed by impregnation for 12 hours or more to manufacture a lithium secondary battery.

A solution, prepared by dissolving 1M LiPF₆ in a mixed solvent of EC/EMC/DEC (25/45/30; volume ratio) and further adding 2 wt% of fluoroethylene carbonate (FEC) and 1 wt% of ethylene sulfate (ESA) based on the total weight of the electrolyte solution, was used as the electrolyte solution.

Then, pre-charging was performed on the lithium secondary battery for 36 minutes at a current (2.5A) corresponding to 0.25C. After 1 hour, degassing was performed, followed by aging for 24 hours or more. Thereafter, formation charging and discharging was performed (charging conditions: CC-CV 0.2C 4.2V 0.05C CUT-OFF, discharging conditions: CC 0.2C 2.5V CUT-OFF). Subsequently, standard charging and discharging was performed (charging conditions: CC-CV 0.5C 4.2V 0.05C CUT-OFF, discharging conditions: CC 0.5C 2.5V CUT-OFF).

### Examples 1 to 7 and Comparative Examples 2 to 7

Lithium secondary batteries were manufactured in the same manner as Comparative Example 1, except that the composition of the cathode active material, the type and content of the dopant element were modified as shown in Table 1 below.

### Experimental Example

### (1) Evaluation of room-temperature (25 °C) cycle life characteristics

After 500 cycles repeated charging (CC-CV 0.5C 4.2V 0.05C CUT-OFF) and discharging (CC 0.5C 2.75V CUT-OFF) were performed on the lithium secondary batteries prepared according to the above-described examples and comparative examples, the room-temperature cycle life characteristic (%) was determined by calculating the discharge capacity at the 500th cycle as a percentage (%) of the discharge capacity at the 1st cycle. Room-temperature cycle life characteristic (%) = (Discharge capacity at 500th cycle/Discharge capacity at 1st cycle) × 100

### (2) Evaluation of output characteristics

The discharge output characteristics of the lithium secondary batteries manufactured according to the examples and comparative examples were measured using the hybrid pulse power characterization (HPPC) method in accordance with the FreedomCar Battery Test Manual.

### (3) Evaluation of high-temperature storage characteristics - capacity recovery rate

The lithium secondary batteries charged under the conditions of CC-CV 0.5C 4.2V 0.05C CUT-OFF were stored in an oven at 60 °C for 20 weeks, discharged under the conditions of CC 0.5C 2.75V CUT-OFF, charged again under the conditions of CC-CV 0.5C 4.2V 0.05C CUT-OFF, and then discharged again under the conditions of CC 0.5C 2.75V CUT-OFF to measure the discharge amount after storage.

The capacity recovery rate (%) was determined by calculating the percentage (%) of the discharge amount after storage relative to the discharge amount during standard charge and discharge as follows. Capacity recovery rate (%) = (Discharge amount after storage/Discharge amount during standard charge and discharge) × 100

The evaluation results are shown in Table 2 below.

**[TABLE 1]**

| | Cathode active material | | | | | BET surface area of CNT (m²/g) | Cathode electrode composition | | | |
|---|---|---|---|---|---|---|---|---|---|---|
| | | | | | | | Active material (wt%) | CNT (wt%) | Binder (wt%) | CNT/Bin der |
| | Type | Ni/Co/Mn (molar ratio) | Dopant element | Doping amount (ppm) | Aspect ratio | | | | | |
| Example 1 | CAM-8 | 50/20/30 | Al | 2,500 | 2.58 | 250 | 98.3 | 0.7 | 1.0 | 0.7 |
| Example 2 | CAM-9 | 60/20/20 | Al | 2,500 | 2.58 | 250 | 98.3 | 0.7 | 1.0 | 0.7 |
| Example 3 | CAM-10 | 70/15/15 | Al | 2,500 | 2.58 | 250 | 98.3 | 0.7 | 1.0 | 0.7 |
| Example 4 | CAM-11 | 80/10/10 | Al | 2,500 | 2.58 | 250 | 98.3 | 0.7 | 1.0 | 0.7 |
| Example 5 | CAM-12 | 90/5/5 | Al | 2,500 | 2.58 | 250 | 98.3 | 0.7 | 1.0 | 0.7 |
| Example 6 | CAM-13 | 94/3/3 | Al | 2,500 | 2.58 | 250 | 98.3 | 0.7 | 1.0 | 0.7 |
| Example 7 | CAM-14 | 98/1/1 | Al | 2,500 | 2.58 | 250 | 98.3 | 0.7 | 1.0 | 0.7 |
| Comparative Example 1 | CAM-1 | 50/20/30 | - | - | 2.58 | 250 | 98.3 | 0.7 | 1.0 | 0.7 |
| Comparative Example 2 | CAM-2 | 60/20/20 | - | - | 2.58 | 250 | 98.3 | 0.7 | 1.0 | 0.7 |
| Comparative Example 3 | CAM-3 | 70/15/15 | - | - | 2.58 | 250 | 98.3 | 0.7 | 1.0 | 0.7 |
| Comparative Example 4 | CAM-4 | 80/10/10 | - | - | 2.58 | 250 | 98.3 | 0.7 | 1.0 | 0.7 |
| Comparative Example 5 | CAM-5 | 90/5/5 | - | - | 2.58 | 250 | 98.3 | 0.7 | 1.0 | 0.7 |
| Comparative Example 6 | CAM-6 | 94/3/3 | - | - | 2.58 | 250 | 98.3 | 0.7 | 1.0 | 0.7 |
| Comparative Example 7 | CAM-7 | 98/1/1 | - | - | 2.58 | 250 | 98.3 | 0.7 | 1.0 | 0.7 |

**[TABLE 2]**

| | Room-temperature life characteristics (%) | Output characteristics (W/kg) | Capacity recovery rate (%) |
|---|---|---|---|
| Example 1 | 92.4 | 2689 | 89.0 |
| Example 2 | 91.5 | 2787 | 87.9 |
| Example 3 | 91.2 | 2779 | 86.7 |
| Example 4 | 90.9 | 2796 | 85.1 |
| Example 5 | 90.5 | 2804 | 81.4 |
| Example 6 | 86.3 | 2877 | 78.2 |
| Example 7 | 82.2 | 2891 | 75.3 |
| Comparative Example 1 | 89.9 | 2270 | 87.6 |
| Comparative Example 2 | 86.7 | 2273 | 86.7 |
| Comparative Example 3 | 86.3 | 2299 | 85.5 |
| Comparative Example 4 | 85.9 | 2320 | 83.8 |
| Comparative Example 5 | 85.3 | 2365 | 80.3 |
| Comparative Example 6 | 77.2 | 2436 | 76.8 |
| Comparative Example 7 | 72.7 | 2445 | 72.7 |

Referring to Tables 1 and 2, in Examples 1 to 7, which included a doping element, the room-temperature cycle life characteristics were 82.2% or more, the output characteristics were 2,689 W/kg or more, and the capacity recovery rate was 75.3% or more.

FIG. 6 is an image illustrating carbon nanotubes included in the cathode according to Example 5, observed using the scanning electron microscope for measurement. Referring to FIG. 6, carbon nanotubes having a BET surface area of 250 m²/g were observed to be formed in a network shape and can be stably maintained. Accordingly, the output characteristics and room-temperature cycle life characteristics may be improved.

In Comparative Examples 1 to 7, which did not include a dopant element, the room-temperature cycle life characteristics, output characteristics, and capacity recovery rate were lower than those of the examples in which all other conditions were maintained the same.

### Examples 8 to 41 and Comparative Examples 8 to 11

Lithium secondary batteries were manufactured in the same manner as in Comparative Example 1, except that the composition of the cathode active material, the type and content of the dopant element, and the aspect ratio were modified as shown in Table 3 below.

The evaluation results are shown in Table 4 below.

**[TABLE 3]**

| | Cathode active material | | | | | BET surface area of CNT (m²/g) | Cathode electrode composition | | | |
|---|---|---|---|---|---|---|---|---|---|---|
| | | | | | | | Active material (wt%) | CNT (wt%) | Binder (wt%) | CNT/Bin der |
| | Type | Ni/Co/Mn (molar ratio) | Dopant element | Doping amount (ppm) | Aspect ratio | | | | | |
| Example 8 | CAM-19 | 90/5/5 | Al | 100 | 1.42 | 250 | 98.3 | 0.7 | 1.0 | 0.7 |
| Example 9 | CAM-20 | 90/5/5 | Al | 100 | 1.53 | 250 | 98.3 | 0.7 | 1.0 | 0.7 |
| Example 10 | CAM-21 | 90/5/5 | Al | 100 | 2.58 | 250 | 98.3 | 0.7 | 1.0 | 0.7 |
| Example 11 | CAM-22 | 90/5/5 | Al | 100 | 5.02 | 250 | 98.3 | 0.7 | 1.0 | 0.7 |
| Example 12 | CAM-23 | 90/5/5 | Al | 100 | 6.51 | 250 | 98.3 | 0.7 | 1.0 | 0.7 |
| Example 13 | CAM-24 | 90/5/5 | Al | 300 | 1.42 | 250 | 98.3 | 0.7 | 1.0 | 0.7 |
| Example 14 | CAM-25 | 90/5/5 | Al | 300 | 1.53 | 250 | 98.3 | 0.7 | 1.0 | 0.7 |
| Example 15 | CAM-26 | 90/5/5 | Al | 300 | 2.58 | 250 | 98.3 | 0.7 | 1.0 | 0.7 |
| Example 16 | CAM-27 | 90/5/5 | Al | 300 | 5.02 | 250 | 98.3 | 0.7 | 1.0 | 0.7 |
| Example 17 | CAM-28 | 90/5/5 | Al | 300 | 6.51 | 250 | 98.3 | 0.7 | 1.0 | 0.7 |
| Example 18 | CAM-29 | 90/5/5 | Al | 2,000 | 1.42 | 250 | 98.3 | 0.7 | 1.0 | 0.7 |
| Example 19 | CAM-30 | 90/5/5 | Al | 2,000 | 1.53 | 250 | 98.3 | 0.7 | 1.0 | 0.7 |
| Example 20 | CAM-31 | 90/5/5 | Al | 2,000 | 2.58 | 250 | 98.3 | 0.7 | 1.0 | 0.7 |
| Example 21 | CAM-32 | 90/5/5 | Al | 2,000 | 5.02 | 250 | 98.3 | 0.7 | 1.0 | 0.7 |
| Example 22 | CAM-33 | 90/5/5 | Al | 2,000 | 6.51 | 250 | 98.3 | 0.7 | 1.0 | 0.7 |
| Example 23 | CAM-34 | 90/5/5 | Al | 2,500 | 1.42 | 250 | 98.3 | 0.7 | 1.0 | 0.7 |
| Example 24 | CAM-35 | 90/5/5 | Al | 2,500 | 1.53 | 250 | 98.3 | 0.7 | 1.0 | 0.7 |
| Example 25 | CAM-36 | 90/5/5 | Al | 2,500 | 5.02 | 250 | 98.3 | 0.7 | 1.0 | 0.7 |
| Example 26 | CAM-37 | 90/5/5 | Al | 2,500 | 6.51 | 250 | 98.3 | 0.7 | 1.0 | 0.7 |
| Example 27 | CAM-38 | 90/5/5 | Al | 4,000 | 1.42 | 250 | 98.3 | 0.7 | 1.0 | 0.7 |
| Example 28 | CAM-39 | 90/5/5 | Al | 4,000 | 1.53 | 250 | 98.3 | 0.7 | 1.0 | 0.7 |
| Example 29 | CAM-40 | 90/5/5 | Al | 4,000 | 2.58 | 250 | 98.3 | 0.7 | 1.0 | 0.7 |
| Example 30 | CAM-41 | 90/5/5 | Al | 4,000 | 5.02 | 250 | 98.3 | 0.7 | 1.0 | 0.7 |
| Example 31 | CAM-42 | 90/5/5 | Al | 4,000 | 6.51 | 250 | 98.3 | 0.7 | 1.0 | 0.7 |
| Example 32 | CAM-43 | 90/5/5 | Al | 12,000 | 1.42 | 250 | 98.3 | 0.7 | 1.0 | 0.7 |
| Example 33 | CAM-44 | 90/5/5 | Al | 12,000 | 1.53 | 250 | 98.3 | 0.7 | 1.0 | 0.7 |
| Example 34 | CAM-45 | 90/5/5 | Al | 12,000 | 2.58 | 250 | 98.3 | 0.7 | 1.0 | 0.7 |
| Example 35 | CAM-46 | 90/5/5 | Al | 12,000 | 5.02 | 250 | 98.3 | 0.7 | 1.0 | 0.7 |
| Example 36 | CAM-47 | 90/5/5 | Al | 12,000 | 6.51 | 250 | 98.3 | 0.7 | 1.0 | 0.7 |
| Example 37 | CAM-48 | 90/5/5 | Al | 15,000 | 1.42 | 250 | 98.3 | 0.7 | 1.0 | 0.7 |
| Example 38 | CAM-49 | 90/5/5 | Al | 15,000 | 1.53 | 250 | 98.3 | 0.7 | 1.0 | 0.7 |
| Example 39 | CAM-50 | 90/5/5 | Al | 15,000 | 2.58 | 250 | 98.3 | 0.7 | 1.0 | 0.7 |
| Example 40 | CAM-51 | 90/5/5 | Al | 15,000 | 5.02 | 250 | 98.3 | 0.7 | 1.0 | 0.7 |
| Example 41 | CAM-52 | 90/5/5 | Al | 15,000 | 6.51 | 250 | 98.3 | 0.7 | 1.0 | 0.7 |
| Comparative Example 8 | CAM-15 | 90/5/5 | - | - | 1.42 | 250 | 98.3 | 0.7 | 1.0 | 0.7 |
| Comparative Example 9 | CAM-16 | 90/5/5 | - | - | 1.53 | 250 | 98.3 | 0.7 | 1.0 | 0.7 |
| Comparative Example 10 | CAM-17 | 90/5/5 | - | - | 5.02 | 250 | 98.3 | 0.7 | 1.0 | 0.7 |
| Example Comparative Example 11 | CAM-18 | 90/5/5 | - | - | 6.51 | 250 | 98.3 | 0.7 | 1.0 | 0.7 |

**[TABLE 4]**

| | Room-temperature life characteristics (%) | Output characteristics (W/kg) | Capacity recovery rate (%) |
|---|---|---|---|
| Example 8 | 75.1 | 2382 | 83.1 |
| Example 9 | 77.2 | 2379 | 82.3 |
| Example 10 | 85.5 | 2372 | 80.9 |
| Example 11 | 85.9 | 2367 | 79.9 |
| Example 12 | 86.1 | 2289 | 77.3 |
| Example 13 | 75.3 | 2637 | 83.3 |
| Example 14 | 78.9 | 2634 | 82.4 |
| Example 15 | 87.8 | 2625 | 81.1 |
| Example 16 | 88.3 | 2621 | 80.2 |
| Example 17 | 89.2 | 2481 | 77.5 |
| Example 18 | 75.7 | 2782 | 83.6 |
| Example 19 | 79.7 | 2777 | 82.7 |
| Example 20 | 88.8 | 2767 | 81.3 |
| Example 21 | 89.6 | 2763 | 80.3 |
| Example 22 | 89.9 | 2651 | 77.6 |
| Example 23 | 75.7 | 2819 | 83.7 |
| Example 24 | 80.2 | 2814 | 82.8 |
| Example 25 | 89.9 | 2799 | 80.3 |
| Example 26 | 91.9 | 2667 | 77.6 |
| Example 27 | 75.8 | 2824 | 84.1 |
| Example 28 | 81.4 | 2823 | 83.2 |
| Example 29 | 90.5 | 2814 | 81.8 |
| Example 30 | 91.1 | 2810 | 80.6 |
| Example 31 | 93.1 | 2716 | 77.6 |
| Example 32 | 76.0 | 2566 | 83.8 |
| Example 33 | 82.0 | 2563 | 82.9 |
| Example 34 | 90.9 | 2554 | 81.5 |
| Example 35 | 92.0 | 2553 | 80.6 |
| Example 36 | 92.3 | 2404 | 77.5 |
| Example 37 | 75.9 | 2448 | 83.6 |
| Example 38 | 82.2 | 2446 | 82.7 |
| Example 39 | 90.7 | 2436 | 81.3 |
| Example 40 | 91.9 | 2434 | 80.4 |
| Example 41 | 92.5 | 2273 | 77.4 |
| Comparative Example 8 | 75.0 | 2377 | 82.2 |
| Comparative Example 9 | 77.1 | 2374 | 81.5 |
| Comparative Example 10 | 85.6 | 2363 | 79.5 |
| Comparative Example 11 | 85.8 | 2259 | 77.1 |

Referring to Tables 3 and 4, in Examples 8 to 41, which included a dopant element, had an aspect ratio of 1.4 to 7.0, and a dopant element content of 100 ppm to 15,000 ppm, the room-temperature cycle life characteristics were 75.1% or more, and the output characteristics were 2,273 W/kg or more. In addition, the capacity recovery rate was 77.3% or more.

FIGS. 3A and 3B are images illustrating cross-sections of arbitrary cathode active material particles among the cathode active material particles according to Example 18, respectively, observed using the scanning electron microscope for measurement. Referring to FIGS. 3A and 3B, it can be seen that when LiNi_{0.9}Co_{0.05}Mn_{0.05}O₂ particles having an aspect ratio of 1.42 and doped with 2,000 ppm of Al were used as primary particles, the primary particles are stably aggregated to form a secondary particle.

FIGS. 4A and 4B are images illustrating cross-sections of arbitrary cathode active material particles among the cathode active material particles according to Example 20, respectively, observed using the scanning electron microscope for measurement. Referring to FIGS. 4A and 4B, it can be seen when LiNi_{0.9}Co_{0.05}Mn_{0.05}O₂ particles having an aspect ratio of 2.58 and doped with 2,000 ppm of Al were used as primary particles, the primary particles are stably aggregated to form a secondary particle.

FIGS. 5A and 5B are images illustrating cross-sections of arbitrary cathode active material particles among the cathode active material particles according to Example 22, respectively, observed using the scanning electron microscope for measurement. Referring to FIGS. 5A and 5B, it can be seen that when LiNi_{0.9}Co_{0.05}Mn_{0.05}O₂ particles having an aspect ratio of 6.51 and doped with Al in an amount of 2,000 ppm were used as primary particles, the primary particles are stably aggregated to form a secondary particle.

In Examples 20, 21, 25, 29, 30, 34 and 35, where the aspect ratio was 2.5 to 5.5 and the dopant element content was 2,000 ppm to 12,000 ppm, the room-temperature cycle life characteristics, output characteristics and capacity recovery rate were slightly improved.

In Comparative Examples 8 to 11, which did not include a dopant element, the room-temperature cycle life characteristics, output characteristics, and capacity recovery rate were lower than those of the examples in which all other conditions were maintained the same.

### Examples 42 to 85

Lithium secondary batteries were manufactured in the same manner as in Comparative Example 1, except that the composition of the cathode active material, the type and content of the dopant element were modified as shown in Table 5 below.

The evaluation results are shown in Table 6 below.

**[TABLE 5]**

| | Cathode active material | | | | | BET surface area of CNT (m²/g) | Cathode electrode composition | | | |
|---|---|---|---|---|---|---|---|---|---|---|
| | | | | | | | Active material (wt%) | CNT (wt%) | Binder (wt%) | CNT/Bi nder |
| | Type | Ni/Co/ Mn (molar ratio) | Dopant element | Doping amount (ppm) | Aspect ratio | | | | | |
| Example 42 | CAM-53 | 90/5/5 | Ti | 2,000 | 2.58 | 250 | 98.3 | 0.7 | 1.0 | 0.7 |
| Example 43 | CAM-54 | 90/5/5 | Ti | 4,000 | 2.58 | 250 | 98.3 | 0.7 | 1.0 | 0.7 |
| Example 44 | CAM-55 | 90/5/5 | Zr | 2,000 | 2.58 | 250 | 98.3 | 0.7 | 1.0 | 0.7 |
| Example 45 | CAM-56 | 90/5/5 | Zr | 4,000 | 2.58 | 250 | 98.3 | 0.7 | 1.0 | 0.7 |
| Example 46 | CAM-57 | 90/5/5 | Ba | 2,000 | 2.58 | 250 | 98.3 | 0.7 | 1.0 | 0.7 |
| Example 47 | CAM-58 | 90/5/5 | Ba | 4,000 | 2.58 | 250 | 98.3 | 0.7 | 1.0 | 0.7 |
| Example 48 | CAM-59 | 90/5/5 | Sr | 2,000 | 2.58 | 250 | 98.3 | 0.7 | 1.0 | 0.7 |
| Example 49 | CAM-60 | 90/5/5 | Sr | 4,000 | 2.58 | 250 | 98.3 | 0.7 | 1.0 | 0.7 |
| Example 50 | CAM-61 | 90/5/5 | W | 2,000 | 2.58 | 250 | 98.3 | 0.7 | 1.0 | 0.7 |
| Example 51 | CAM-62 | 90/5/5 | W | 4,000 | 2.58 | 250 | 98.3 | 0.7 | 1.0 | 0.7 |
| Example 52 | CAM-63 | 90/5/5 | Nb | 2,000 | 2.58 | 250 | 98.3 | 0.7 | 1.0 | 0.7 |
| Example 53 | CAM-64 | 90/5/5 | Nb | 4,000 | 2.58 | 250 | 98.3 | 0.7 | 1.0 | 0.7 |
| Example 54 | CAM-65 | 90/5/5 | Y | 2,000 | 2.58 | 250 | 98.3 | 0.7 | 1.0 | 0.7 |
| Example 55 | CAM-66 | 90/5/5 | Y | 4,000 | 2.58 | 250 | 98.3 | 0.7 | 1.0 | 0.7 |
| Example 56 | CAM-67 | 90/5/5 | Mg | 2,000 | 2.58 | 250 | 98.3 | 0.7 | 1.0 | 0.7 |
| Example 57 | CAM-68 | 90/5/5 | Mg | 4,000 | 2.58 | 250 | 98.3 | 0.7 | 1.0 | 0.7 |
| Example 58 | CAM-69 | 90/5/5 | V | 2,000 | 2.58 | 250 | 98.3 | 0.7 | 1.0 | 0.7 |
| Example 59 | CAM-70 | 90/5/5 | V | 4,000 | 2.58 | 250 | 98.3 | 0.7 | 1.0 | 0.7 |
| Example 60 | CAM-71 | 90/5/5 | Ta | 2,000 | 2.58 | 250 | 98.3 | 0.7 | 1.0 | 0.7 |
| Example 61 | CAM-72 | 90/5/5 | Ta | 4,000 | 2.58 | 250 | 98.3 | 0.7 | 1.0 | 0.7 |
| Example 62 | CAM-73 | 90/5/5 | Mo | 2,000 | 2.58 | 250 | 98.3 | 0.7 | 1.0 | 0.7 |
| Example 63 | CAM-74 | 90/5/5 | Mo | 4,000 | 2.58 | 250 | 98.3 | 0.7 | 1.0 | 0.7 |
| Example 64 | CAM-75 | 90/5/5 | La | 2,000 | 2.58 | 250 | 98.3 | 0.7 | 1.0 | 0.7 |
| Example 65 | CAM-76 | 90/5/5 | La | 4,000 | 2.58 | 250 | 98.3 | 0.7 | 1.0 | 0.7 |
| Example 66 | CAM-77 | 90/5/5 | B | 2,000 | 2.58 | 250 | 98.3 | 0.7 | 1.0 | 0.7 |
| Example 67 | CAM-78 | 90/5/5 | B | 4,000 | 2.58 | 250 | 98.3 | 0.7 | 1.0 | 0.7 |
| Example 68 | CAM-79 | 90/5/5 | Al | 1,250 | 2.58 | 250 | 98.3 | 0.7 | 1.0 | 0.7 |
| | | | Y | 1,250 | | | | | | |
| Example 69 | CAM-80 | 90/5/5 | Al | 2,000 | 2.58 | 250 | 98.3 | 0.7 | 1.0 | 0.7 |
| | | | Y | 2,000 | | | | | | |
| Example 70 | CAM-81 | 90/5/5 | Zr | 1,250 | 2.58 | 250 | 98.3 | 0.7 | 1.0 | 0.7 |
| | | | Mo | 1,250 | | | | | | |
| Example 71 | CAM-82 | 90/5/5 | Zr | 2,000 | 2.58 | 250 | 98.3 | 0.7 | 1.0 | 0.7 |
| | | | Mo | 2,000 | | | | | | |
| Example 72 | CAM-83 | 90/5/5 | Sr | 1,250 | 2.58 | 250 | 98.3 | 0.7 | 1.0 | 0.7 |
| | | | W | 1,250 | | | | | | |
| Example 73 | CAM-84 | 90/5/5 | Sr | 2,000 | 2.58 | 250 | 98.3 | 0.7 | 1.0 | 0.7 |
| | | | W | 2,000 | | | | | | |
| Example 74 | CAM-85 | 90/5/5 | Nb | 1,250 | 2.58 | 250 | 98.3 | 0.7 | 1.0 | 0.7 |
| | | | Ti | 1,250 | | | | | | |
| Example 75 | CAM-86 | 90/5/5 | Nb | 2,000 | 2.58 | 250 | 98.3 | 0.7 | 1.0 | 0.7 |
| | | | Ti | 2,000 | | | | | | |
| Example 76 | CAM-87 | 90/5/5 | Mg | 1,250 | 2.58 | 250 | 98.3 | 0.7 | 1.0 | 0.7 |
| | | | B | 1,250 | | | | | | |
| Example 77 | CAM-88 | 90/5/5 | Mg | 2,000 | 2.58 | 250 | 98.3 | 0.7 | 1.0 | 0.7 |
| | | | B | 2,000 | | | | | | |
| Example 78 | CAM-89 | 90/5/5 | Ta | 1,250 | 2.58 | 250 | 98.3 | 0.7 | 1.0 | 0.7 |
| | | | Ba | 1,250 | | | | | | |
| Example 79 | CAM-90 | 90/5/5 | Ta | 2,000 | 2.58 | 250 | 98.3 | 0.7 | 1.0 | 0.7 |
| | | | Ba | 2,000 | | | | | | |
| Example 80 | CAM-91 | 90/5/5 | La | 1,250 | 2.58 | 250 | 98.3 | 0.7 | 1.0 | 0.7 |
| | | | V | 1,250 | | | | | | |
| Example 81 | CAM-92 | 90/5/5 | La | 2,000 | 2.58 | 250 | 98.3 | 0.7 | 1.0 | 0.7 |
| | | | V | 2,000 | | | | | | |
| Example 82 | CAM-93 | 90/5/5 | Ti | 900 | 2.58 | 250 | 98.3 | 0.7 | 1.0 | 0.7 |
| | | | Sr | 800 | | | | | | |
| | | | Y | 800 | | | | | | |
| Example 83 | CAM-94 | 90/5/5 | Ti | 1,400 | 2.58 | 250 | 98.3 | 0.7 | 1.0 | 0.7 |
| | | | Sr | 1,400 | | | | | | |
| | | | Y | 1,200 | | | | | | |
| Example 84 | CAM-95 | 90/5/5 | Al | 900 | 2.58 | 250 | 98.3 | 0.7 | 1.0 | 0.7 |
| | | | Zr | 800 | | | | | | |
| | | | W | 800 | | | | | | |
| Example 85 | CAM-96 | 90/5/5 | Al | 1,400 | 2.58 | 250 | 98.3 | 0.7 | 1.0 | 0.7 |
| | | | Zr | 1,400 | | | | | | |
| | | | W | 1,200 | | | | | | |

**[TABLE 6]**

| | Room-temperature life characteristics (%) | Output characteristics (W/kg) | Capacity recovery rate (%) |
|---|---|---|---|
| Example 42 | 89.8 | 2791 | 81.3 |
| Example 43 | 90.7 | 2838 | 81.8 |
| Example 44 | 89.6 | 2791 | 81.2 |
| Example 45 | 90.8 | 2814 | 81.9 |
| Example 46 | 89.6 | 2743 | 81.1 |
| Example 47 | 90.9 | 2814 | 81.7 |
| Example 48 | 89.7 | 2720 | 81.5 |
| Example 49 | 90.8 | 2885 | 81.9 |
| Example 50 | 89.5 | 2791 | 81.1 |
| Example 51 | 90.7 | 2838 | 81.3 |
| Example 52 | 89.8 | 2720 | 81.2 |
| Example 53 | 90.9 | 2814 | 81.4 |
| Example 54 | 89 | 2767 | 81.2 |
| Example 55 | 89.8 | 2885 | 81.6 |
| Example 56 | 88.7 | 2696 | 81.1 |
| Example 57 | 89.1 | 2791 | 81.3 |
| Example 58 | 89.5 | 2791 | 81.2 |
| Example 59 | 89.8 | 2838 | 81.3 |
| Example 60 | 88.6 | 2720 | 81.3 |
| Example 61 | 89.2 | 2791 | 81.4 |
| Example 62 | 88.4 | 2767 | 81.1 |
| Example 63 | 89.5 | 2814 | 81.2 |
| Example 64 | 89 | 2767 | 81.2 |
| Example 65 | 89.8 | 2885 | 81.3 |
| Example 66 | 88.1 | 2743 | 81.3 |
| Example 67 | 88.9 | 2838 | 81.5 |
| Example 68 | 90.9 | 2838 | 81.4 |
| Example 69 | 91.9 | 3027 | 81.6 |
| Example 70 | 90.7 | 2885 | 81.5 |
| Example 71 | 91.5 | 3004 | 81.6 |
| Example 72 | 91.8 | 2909 | 81.2 |
| Example 73 | 92.5 | 3051 | 81.3 |
| Example 74 | 91.3 | 2956 | 81.5 |
| Example 75 | 92 | 3098 | 82.0 |
| Example 76 | 91.2 | 2933 | 81.0 |
| Example 77 | 92.1 | 3122 | 81.2 |
| Example 78 | 90.9 | 2980 | 81.1 |
| Example 79 | 92.1 | 3051 | 81.4 |
| Example 80 | 90.6 | 2862 | 81.1 |
| Example 81 | 92.2 | 3027 | 81.3 |
| Example 82 | 90.8 | 2956 | 81.6 |
| Example 83 | 92.8 | 3145 | 81.9 |
| Example 84 | 90.8 | 3027 | 81.2 |
| Example 85 | 93.2 | 3169 | 81.6 |

Referring to Tables 5 and 6, in Examples 42 to 85, where at least one of Al, Ti, Zr, Ba, Sr, W, Nb, Y, Mg, V, Ta, Mo, La and B was used as a dopant element, and the content of the dopant element was 2,000 ppm to 4,000 ppm, the room-temperature cycle life characteristics were 88.1% or more, and the output characteristics were 2,696 W/kg or more. In addition, the capacity recovery rate was 81% or more.

In Examples 42 to 45, 50, and 51, where at least one of Ti, Zr and W was used as a dopant element, the room-temperature cycle life characteristics, output characteristics, and capacity recovery rate were slightly improved.

In Examples 68 to 85, where two or more dopant elements were used as dopant elements, the room-temperature cycle life characteristics, output characteristics, and capacity recovery rate were improved.

### Examples 86 to 91 and Comparative Examples 12 to 21

Lithium secondary batteries were manufactured in the same manner as in Comparative Example 1, except that the composition of the cathode active material, the type and content of the dopant element, and the contents of the CNT and the binder were modified as shown in Table 7 below.

The evaluation results are shown in Table 8 below.

**[TABLE 7]**

| | Cathode active material | | | | | BET surface area of CNT (m²/g) | Cathode electrode composition | | | |
|---|---|---|---|---|---|---|---|---|---|---|
| | | | | | | | Active material (wt%) | CNT (wt%) | Binder (wt%) | CNT/Bin der |
| | Type | Ni/Co/Mn (molar ratio) | Dopant element | Doping amount (ppm) | Aspect ratio | | | | | |
| Example 86 | CAM-12 | 90/5/5 | Al | 2,500 | 2.58 | 250 | 98.6 | 0.4 | 1.0 | 0.4 |
| Example 87 | CAM-12 | 90/5/5 | Al | 2,500 | 2.58 | 250 | 98.1 | 0.9 | 1.0 | 0.9 |
| Example 88 | CAM-12 | 90/5/5 | Al | 2,500 | 2.58 | 250 | 97.9 | 1.1 | 1.0 | 1.1 |
| Example 89 | CAM-12 | 90/5/5 | Al | 2,500 | 2.58 | 250 | 97.7 | 1.3 | 1.0 | 1.3 |
| Example 90 | CAM-12 | 90/5/5 | Al | 2,500 | 2.58 | 250 | 97.6 | 1.4 | 1.0 | 1.4 |
| Example 91 | CAM-12 | 90/5/5 | Al | 2,500 | 2.58 | 250 | 95.9 | 2.1 | 2.0 | 1.1 |
| Comparative Example 12 | CAM-5 | 90/5/5 | - | - | 2.58 | 250 | 98.7 | 0.3 | 1.0 | 0.3 |
| Comparative Example 13 | CAM-5 | 90/5/5 | - | - | 2.58 | 250 | 98.6 | 0.4 | 1.0 | 0.4 |
| Comparative Example 14 | CAM-5 | 90/5/5 | - | - | 2.58 | 250 | 98.1 | 0.9 | 1.0 | 0.9 |
| Comparative Example 15 | CAM-5 | 90/5/5 | - | - | 2.58 | 250 | 97.9 | 1.1 | 1.0 | 1.1 |
| Comparative Example 16 | CAM-5 | 90/5/5 | - | - | 2.58 | 250 | 97.7 | 1.3 | 1.0 | 1.3 |
| Comparative Example 17 | CAM-5 | 90/5/5 | - | - | 2.58 | 250 | 97.5 | 1.5 | 1.0 | 1.5 |
| Comparative Example 18 | CAM-5 | 90/5/5 | - | - | 2.58 | 250 | 96.6 | 1.4 | 2.0 | 0.7 |
| Comparative Example 19 | CAM-5 | 90/5/5 | - | - | 2.58 | 250 | 94.9 | 2.1 | 3.0 | 0.7 |
| Comparative Example 20 | CAM-12 | 90/5/5 | Al | 2,500 | 2.58 | 250 | 98.7 | 0.3 | 1.0 | 0.3 |
| Comparative Example 21 | CAM-12 | 90/5/5 | Al | 2,500 | 2.58 | 250 | 97.5 | 1.5 | 1.0 | 1.5 |

**[TABLE 8]**

| | Room-temperature life characteristics (%) | Output characteristics (W/kg) | Capacity recovery rate (%) |
|---|---|---|---|
| Example 86 | 84.7 | 2103 | 85.1 |
| Example 87 | 92.2 | 3056 | 80.3 |
| Example 88 | 93.0 | 3140 | 79.2 |
| Example 89 | 91.9 | 3042 | 78.0 |
| Example 90 | 90.8 | 2888 | 81.8 |
| Example 91 | 91.1 | 2944 | 82.3 |
| Comparative Example 12 | 69.7 | 1488 | 85.8 |
| Comparative Example 13 | 80.1 | 1788 | 83.8 |
| Comparative Example 14 | 86.8 | 2389 | 79.1 |
| Comparative Example 15 | 87.2 | 2393 | 77.9 |
| Comparative Example 16 | 87.0 | 2391 | 76.8 |
| Comparative Example 17 | 80.8 | 2176 | 74.7 |
| Comparative Example 18 | 85.5 | 2393 | 80.8 |
| Comparative Example 19 | 85.7 | 2398 | 81.1 |
| Comparative Example 20 | 70.7 | 1570 | 86.8 |
| Comparative Example 21 | 81.9 | 2355 | 76.2 |

Referring to Tables 7 and 8, in Examples 86 to 91, which included a dopant element and had a CNT/binder value of 0.35 to 1.45, the room-temperature cycle life characteristics were 84.7% or more, and the output characteristics were 2,103 W/kg or more. In addition, the capacity recovery rate was 78.0% or more.

In Example 87, where the CNT/binder value was 0.5 to 1.0, the room-temperature cycle life characteristics, output characteristics, and capacity recovery rate were slightly increased.

In Examples 90 and 91, where the binder/CNT value (the reciprocal of the CNT/binder value) was 0.7 to 1.0, the room-temperature cycle life characteristics, output characteristics, and capacity recovery rate were slightly increased.

In Comparative Examples 12 to 19, which did not include a dopant element, the room-temperature cycle life characteristics, output characteristics, and capacity recovery rate were lower than those of the examples in which all other conditions were maintained the same.

In Comparative Examples 20 and 21, which included a dopant element but had a CNT/binder value of 0.35 to 1.45, the room-temperature cycle life characteristics, output characteristics, and capacity recovery rate were degraded.

### Examples 92 to 95 and Comparative Examples 22 to 25

Lithium secondary batteries were manufactured in the same manner as Comparative Example 1, except that the composition of the cathode active material, the type and content of the dopant element, and the specific surface area of the CNT were modified as shown in Table 9 below.

The evaluation results are shown in Table 10 below.

**[TABLE 9]**

| | Cathode active material | | | | | BET surface area of CNT (m²/g) | Cathode electrode composition | | | |
|---|---|---|---|---|---|---|---|---|---|---|
| | | | | | | | Active material (wt%) | CNT (wt%) | Binder (wt%) | CNT/Bin der |
| | Type | Ni/Co/Mn (molar ratio) | Dopant element | Doping amount (ppm) | Aspect ratio | | | | | |
| Example 92 | CAM-12 | 90/5/5 | Al | 2,500 | 2.58 | 50 | 98.3 | 0.7 | 1.0 | 0.7 |
| Example 93 | CAM-12 | 90/5/5 | Al | 2,500 | 2.58 | 100 | 98.3 | 0.7 | 1.0 | 0.7 |
| Example 94 | CAM-12 | 90/5/5 | Al | 2,500 | 2.58 | 400 | 98.3 | 0.7 | 1.0 | 0.7 |
| Example 95 | CAM-12 | 90/5/5 | Al | 2,500 | 2.58 | 500 | 98.3 | 0.7 | 1.0 | 0.7 |
| Comparative Example 22 | CAM-5 | 90/5/5 | - | - | 2.58 | 50 | 98.3 | 0.7 | 1.0 | 0.7 |
| Comparative Example 23 | CAM-5 | 90/5/5 | - | - | 2.58 | 100 | 98.3 | 0.7 | 1.0 | 0.7 |
| Comparative Example 24 | CAM-5 | 90/5/5 | - | - | 2.58 | 400 | 98.3 | 0.7 | 1.0 | 0.7 |
| Comparative Example 25 | CAM-5 | 90/5/5 | - | - | 2.58 | 500 | 98.3 | 0.7 | 1.0 | 0.7 |

**[TABLE 10]**

| | Room-temperature life characteristics (%) | Output characteristics (W/kg) | Capacity recovery rate (%) |
|---|---|---|---|
| Example 92 | 81.6 | 2243 | 86.0 |
| Example 93 | 87.3 | 2748 | 82.9 |
| Example 94 | 94.1 | 3054 | 80.5 |
| Example 95 | 95.3 | 3149 | 76.9 |
| Comparative Example 22 | 79.8 | 2129 | 83.8 |
| Comparative Example 23 | 82.3 | 2330 | 81.5 |
| Comparative Example 24 | 86.5 | 2436 | 79.5 |
| Comparative Example 25 | 87.4 | 2483 | 76.7 |

Referring to Table 9 and Table 10, in Examples 92 to 95, which included a dopant element and had a specific surface area of CNT in the range of 50 m²/g to 500 m²/g, the room-temperature cycle life characteristics were 81.6% or more, and the output characteristics were 2,243 W/kg or more. In addition, the capacity recovery rate was 76.9% or more.

In Examples 93 and 94, which had a specific surface area of CNT in the range of 100 m²/g to 450 m²/g, the room-temperature cycle life characteristics, output characteristics, and capacity recovery rate were slightly increased.

In Comparative Examples 22 to 25, which did not include a dopant element, the room-temperature cycle life characteristics, output characteristics, and capacity recovery rate were lower than those of the examples in which all other conditions were maintained the same.

## Claims

1. A cathode for a lithium secondary battery comprising:
a cathode current collector; and
a cathode active material layer which is disposed on at least one surface of the cathode current collector, and comprises a cathode active material comprising a lithium metal oxide having a secondary particle form in which a plurality of primary particles are aggregated, and doped with at least one dopant element, a conductive material comprising carbon nanotubes, and a binder,
wherein the primary particles have an aspect ratio of 1.4 to 7.0, and
a ratio of a weight of the conductive material to a weight of the binder is 0.35 to 1.45.

2. The cathode for a lithium secondary battery according to claim 1, wherein the primary particles have an aspect ratio of 2.5 to 5.5.

3. The cathode for a lithium secondary battery according to claims 1 or 2, wherein the lithium metal oxide comprises nickel,
wherein a molar fraction of nickel relative to the total number of moles of all elements excluding lithium and oxygen in the lithium metal oxide is 0.5 to 1.

4. The cathode for a lithium secondary battery according to claim 3, wherein the molar fraction of nickel relative to the total number of moles of all elements excluding lithium and oxygen in the lithium metal oxide is 0.6 to 0.94.

5. The cathode for a lithium secondary battery according to one of claims 1 to 4, wherein the dopant element comprises at least one of Al, Ti, Zr, Ba, Sr, W, Nb, Y, Mg, V, Ta, Mo, La and B.

6. The cathode for a lithium secondary battery according to claim 5, wherein the dopant element comprises at least one of Al, Ti, Zr and W.

7. The cathode for a lithium secondary battery according to claims 5 or 6, wherein the dopant element comprises two or more different elements.

8. The cathode for a lithium secondary battery according to one of claims 1 to 7, wherein a content by weight of the dopant element is 100 ppm to 15,000 ppm based on a total weight of the lithium metal oxide.

9. The cathode for a lithium secondary battery according to claim 8, wherein the content by weight of the dopant element is 2,000 ppm to 12,000 ppm based on the total weight of the lithium metal oxide.

10. The cathode for a lithium secondary battery according to one of claims 1 to 9, wherein the carbon nanotube comprises multi-walled carbon nanotubes (MWCNTs).

11. The cathode for a lithium secondary battery according to one of claims 1 to 10, wherein the carbon nanotubes have a BET specific surface area of 100 m²/g to 450 m²/g.

12. The cathode for a lithium secondary battery according to claim 11, wherein the carbon nanotubes have a BET specific surface area of 200 m²/g to 400 m²/g.

13. The cathode for a lithium secondary battery according to one of claims 1 to 12, wherein a weight ratio of the conductive material to the binder is 0.5 to 1.0 based on the total weight of the cathode active material layer.

14. The cathode for a lithium secondary battery according to one of claims 1 to 13, wherein the weight ratio of the binder to the conductive material is 0.7 to 1.0 based on the total weight of the cathode active material layer.

15. A lithium secondary battery comprising:
the cathode according to one of claims 1 to 14; and
an anode disposed to face the cathode.
